# EUROPEAN PATENT APPLICATION

(11) **EP 3 254 995 A1**
(43) Date of publication of application: **13.12.2017**
(21) Application number: 16305690.6
(22) Date of filing: 10.06.2016
(51) Int. Cl.: B65G 47/82, B65G 47/86

(54) **A CONVEYING APPARATUS FOR TRANSPORTING ARTICLES, IN PARTICULAR CONTAINERS**

(71) Applicant: SIDEL PARTICIPATIONS, 76930 Octeville-sur-Mer (FR)
(72) Inventor: PINI, Stefano, 43126 Parma (IT); ZONI, Roberto, 43126 Parma (IT); FORNI, Lorenzo, 43126 Parma (IT)
(74) Representative: Siloret, Patrick

(57) **Abstract**

There is described a conveying apparatus (1) comprising: a feeding conveyor (3) having at least one linear transport branch (4) configured to advance a plurality of articles (2) along a first path (P) of linear configuration and defining a linear transport surface (5) on which the articles (2) rest in use; and a conveying wheel (6) arranged adjacent to the linear transport branch (4) of the feeding conveyor (3) and configured to selectively pick up articles (2) from the linear transport branch (4) at a pick-up station (7) as well as to transfer the articles (2) themselves away from the pick-up station (7); the conveying wheel (6) comprises a plurality of receiving seats (10) rotating along a second path (T) of annular configuration, adjacent to the first path (P) at the pick-up station (7); the conveying apparatus (1) further comprising: an endless conveyor (25) arranged on the opposite side of the linear transport branch (4) with respect to the conveying wheel (6) and having an operative branch (26) extending parallel to the linear transport branch (4) itself; and a plurality of pushing elements (27) carried by the endless conveyor (25) and cyclically acting on the articles (2) destined to be picked-up at the pick-up station (7) to guide them within the respective receiving seats (10). [Figure 1]

## Description

### TECHNICAL FIELD

The present invention relates to a conveying apparatus for transporting articles, in particular containers, which the following description will refer to, although this is in no way intended to limit the scope of protection as defined by the accompanying claims.

### BACKGROUND ART

As known, a wide range of plastic containers, such as bottles, are formed in carousel-type or wheel-type blow moulding machines from plastic preforms. In particular, the heated preforms are accommodated in correspondingly designed blow moulds of the blow moulding machine and are then blown, during rotation of the blow moulding machine, under high pressure and high temperature to form respective containers.

The containers exiting from the blow moulding machine are then transferred to a carousel-type or wheel-type filling machine, where such containers are filled with a pourable product of the above-mentioned type. At this point, the containers are capped or closed in a carousel or wheel and subsequently transferred to a further carousel-type or wheel-type labelling machine for applying one or more labels on the external surface of the containers themselves. Then, the containers are grouped and packed in packaging units to be then delivered to store houses.

In practice, all the mentioned machines define a plurality of handling stations crossed by the preforms and the containers prior to reaching the final configuration in which the containers themselves are sold.

In case of containers made up of other types of materials, such as glass bottles or cans, the handling stations do not include blow moulding machines and can additionally comprise cleaning or rinsing machines, sterilizing machines, drying machines, and so on. Also these machines typically use carousels or wheels to advance the containers during performance of the various operations.

In all these cases, transfer of containers between the various handling stations is typically performed by using linear conveyors and star wheels.

It is therefore quite frequent that the containers have to be transferred from a linear conveyor to a conveying wheel, such as a star wheel or a carousel. In many cases, not all the containers advanced by the linear conveyor in a stream are transferred to the adjacent conveying wheel, but only some of them; in other words, some containers of the stream are picked up by the conveying wheel at a pick-up station while the others continue to remain on the linear conveyor after having passed the pick-up station itself.

In order to selectively pick-up the containers from the linear conveyor, the conveying wheel may be equipped with a plurality of gripping members moving from an open position to a closed position while passing through the pick-up station. More specifically, each gripping member protrudes over the linear conveyor at the pick-up station so as to be engaged by one respective container while it is in the open position; at this point, the gripping member is moved to the closed position so as to clamp the container to be picked-up; in the case of bottles, the clamping action is typically performed at the bottle neck.

After gripping, a top or intermediate portion of the container is clamped by the respective gripping member, for instance the bottle neck, while a bottom portion of the container is either sliding on the top surface of the linear conveyor or is free. The container suddenly experiences an acceleration due to the transition from the linear motion to the rotational motion imparted by the conveying wheel. Due to the centrifugal acceleration, the container moves into a tilted position and a bending moment acts on the top or intermediate portion clamped by the respective gripping member.

This effect may be detrimental to the proper functioning of the gripping member, particularly at high speed and when handling filled and capped or closed containers.

Moreover, the stress on the container material can be excessive, particularly when handling lightweight containers.

The same problems occur when the conveying wheel is equipped, in place of the gripping members, with receiving members, each of which defines an open seat destined to be engaged by one respective container at the pick-up station and selectively closed by a movable locking element.

### DISCLOSURE OF INVENTION

It is therefore an object of the present invention to provide a conveying apparatus for transporting articles, in particular containers, which is designed to overcome, in a straightforward and low-cost manner, the aforementioned drawbacks associated with the known conveying apparatuses.

According to the present invention, there is provided a conveying apparatus for transporting articles, in particular containers, as claimed in claim 1.

### BRIEF DESCRIPTION OF THE DRAWINGS

A preferred embodiment is hereinafter disclosed for a better understanding of the present invention, by mere way of a non-limitative example and with reference to the accompanying drawings, in which:
Figure 1 shows a top plan view of a conveying apparatus according to the present invention for transporting articles, in particular containers, with parts removed for clarity;
Figure 2 shows a portion of the conveying apparatus of Figure 1, with parts removed for clarity;
Figure 3 shows a larger-scale detail of Figure 2, with parts removed for clarity;
Figure 4 shows the portion of the conveying apparatus of Figure 2, in a different operative configuration;
Figure 5 shows a detail of Figure 4, in another different operative configuration of the conveying apparatus according to the present invention; and
Figure 6 shows the portion of the conveying apparatus of Figures 2 and 4, in a further different operative configuration of the conveying apparatus according to the present invention.

### BEST MODE FOR CARRYING OUT THE INVENTION

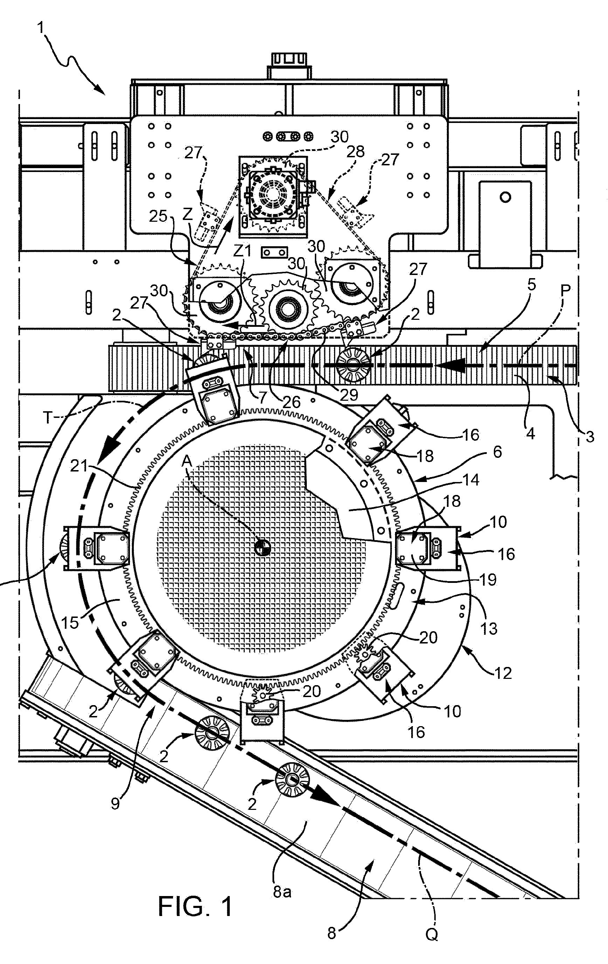

Number 1 in Figure 1 indicates as a whole a conveying apparatus made according to the present invention for transporting articles, in particular containers and preferably bottles 2, which the following description will specifically refer to without any limitative effect on the scope of protection of the present invention.

Conveying apparatus 1 basically comprises:
- a feeding conveyor 3 having at least one linear transport branch 4 advancing a plurality of bottles 2, lined up one after the other, along a linear path P and defining a linear transport surface 5 on which the bottles 2 themselves rest;
- a transfer conveying wheel 6, in the specific example a star wheel, arranged adjacent to linear transport branch 4 of feeding conveyor 3 at a pick-up station 7 and configured to selectively pick up bottles 2 from the linear transport branch 4 at the pick-up station 7 as well as to transfer them away from the pick-up station 7 itself; and
- a linear outlet conveyor 8 arranged adjacent to conveying wheel 6 at an outlet station 9 and configured to receive, at the outlet station 9 itself, the bottles 2 picked up from feeding conveyor 3 and to advance such bottles 2 along a respective linear path Q, distinct from path P.

Feeding conveyor 3 is preferably configured to advance bottles 2 at a constant velocity V1, whilst outlet conveyor 8 is preferably configured to advance the bottles 2 at a constant velocity V2, different from the velocity V1.

The pitch of the bottles 2 on feeding conveyor 3 might be also different from the pitch on outlet conveyor 8.

Conveying wheel 6 is preferably configured to change pitch and velocity of bottles 2 from pick-up station 7 to outlet station 9 in order to adapt it to the velocity V2 of bottles 2 on outlet conveyor 8.

As shown in Figure 1, feeding and outlet conveyors 3, 8 are preferably belt conveyors, and paths P and Q preferably have horizontal configurations.

More specifically, bottles 2 are advanced in upright positions, with their necks above their bases, on linear transport branch 4 of feeding conveyor 3; linear transport branch 4 defines the upper part of feeding conveyor 3, which also comprises a return branch (not shown) located below the linear transport branch 4 itself.

In a completely analogous manner, outlet conveyor 8 comprises an upper and horizontal linear transport branch 8a, along which bottles 2 are advanced in upright positions with their necks above their bases, and a return branch (not shown) located below the linear transport branch 8a.

Bottles 2 rest with their bases on linear transport branches 4, 8a of feeding and outlet conveyors 3, 8 and are transferred by conveying wheel 4 in suspended positions by their necks.

In the specific example shown, bottles 2 are preferably filled and capped.

Linear transport branches 4, 8a of feeding and outlet conveyors 3, 8 respectively define paths P, Q.

Feeding and/or outlet conveyors 3, 8 as well as conveying wheel 6 may be also part of bottle or container handling machines, such as blow moulding machines, filling machines, capping machines, labelling machines, etc.

As visible in Figure 1, conveying wheel 6 has a vertical central axis A orthogonal to paths P, Q. Conveying wheel 6 is provided on its periphery with a plurality of receiving seats 10 (described in greater detail later on) rotating along an annular, i.e. circular, path T of axis A and configured to receive respective bottles 2 to be transferred from path P to path Q.

Path T of receiving seats 10 of conveying wheel 6 is tangent to path P at pick-up station 7 and to path Q at outlet station 9. In addition, path Q exits tangentially from outlet station 9.

Pick-up and outlet stations 7, 9 are spaced from one another by a given arc about the respective axis A depending on the desired layout of conveying apparatus 1. In the specific example shown in Figure 1, pick-up and outlet stations 7, 9 are spaced by an arc comprised between 90° and 180° about the respective axis A.

Each receiving seat 10 is cyclically set between a closed configuration, in which it retains a respective bottle 2, and an open configuration, in which it allows engagement or release of a respective bottle 2.

As clearly visible in Figure 1, receiving seats 10 extend partially above linear transport surface 5 of feeding conveyor 3 at pick-up station 7 and in the immediate vicinity thereof; receiving seats 10 also extend partially above outlet conveyor 8 at outlet station 9 and in the immediate vicinity thereof.

In the example shown in the enclosed Figures, receiving seats 10 are defined by respective gripping members 11.

More in general, conveying wheel 6 basically comprises:
- a fixed support structure 12 (only partially visible);
- a movable portion 13 mounted on support structure 12 in a rotating manner about axis A; and
- gripping members 11 carried by movable portion 13, movable along path T with respect to support structure 12 and configured to selectively pick up respective bottles 2 from feeding conveyor 3 at pick-up station 7, to advance such bottles 2 away from the pick-up station 7 itself and to release the above bottles 2 at outlet station 9 on outlet conveyor 8.

In particular, movable portion 13 comprises a substantially disk-shaped rotating table 14 coaxial to axis A, arranged above support structure 12, peripherally carrying gripping members 11 and rotated in a known manner with respect to the support structure 12 itself by an electric motor (not shown).

In the preferred embodiment shown in the enclosed Figures, movable portion 13 further comprises:
- an endless or annular guide element 15 secured or integral to a peripheral portion of rotating table 14 and extending parallel to path T; and
- a plurality of individual carriages 16 coupled in a sliding manner with guide element 15, carrying the respective gripping members 11 and driven along the guide element 15 itself independently from each other.

In particular, guide element 15 is defined by an annular bar mounted onto peripheral portion of rotating table 14 so as to radially protrude therefrom. In a similar manner, each carriage 16 is mounted on guide element 15 so as to radially protrude therefrom with respect to axis A.

Each gripping member 11 is suspended from the bottom of the respective carriage 16 so as to be able to interact with the neck of a respective bottle 2.

Each carriage 16 is preferably equipped with its own electric motor 18, preferably a servomotor, so as to move along guide element 15 independently from the other carriages 16.

In particular, each motor 18 has a casing 19, secured on top of the relative carriage 16 and projecting therefrom vertically upwards, and an output shaft (known per se and not shown) extending parallel to axis A, supported by casing 19 in a rotating manner about its axis and angularly coupled to a cog 20, in turn meshing with an annular spur gear 21 secured or integral to rotating table 14.

In view of the above, each carriage 16 and therefore each gripping member 11 have a global motion which is the result of the combination of:
- a primary angular motion of rotating table 14 with respect to support structure 12; and
- a secondary angular motion of the carriage 16 itself along guide element 15 with respect to the rotating table 14.

In particular, the tangential velocity of the rotating table 14 is conveniently set between the velocity V1 of the bottles 2 along path P and the velocity V2 of the bottles 2 along path Q. Such tangential velocity is usually maintained constant; it may be altered only to manage variations in the values of the velocities V1 and/or V2.

The velocity of each carriage 16 with respect to the tangential velocity of rotating table 14 is varied between a maximum (in absolute value) negative value and a maximum positive value depending on the angular position of the carriage 16 itself. This means that each carriage 16 moves back and forth with respect to an ideal zero point on rotating table 14, effectively changing the pitch between two consecutive gripping members 11 in the course of a complete rotation. The combination of the primary and secondary angular motions results in a variable velocity profile of each gripping member 11 with two fixed values: the velocity V1 at which bottles 2 are received by conveying wheel 6 from feeding conveyor 3 and the velocity V2 at which the bottles 2 are delivered from the conveying wheel 6 itself to the outlet conveyor 8.

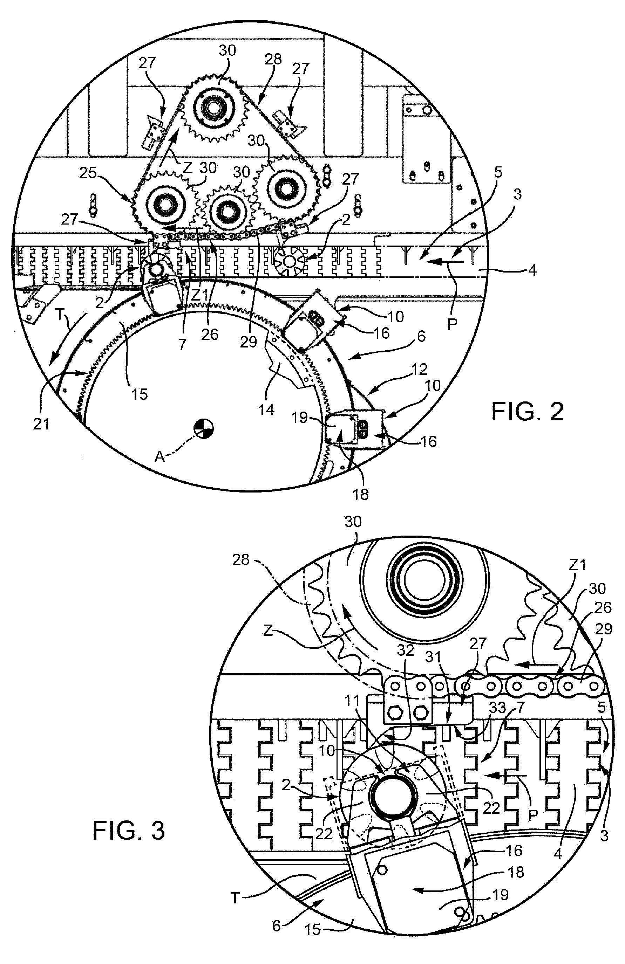

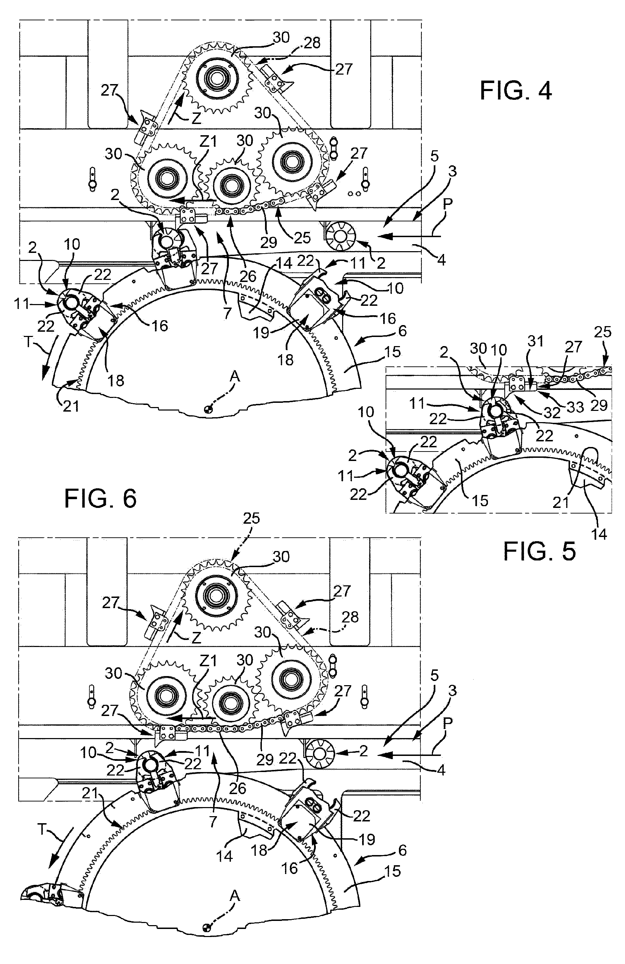

As shown in Figures 2 to 6, each gripping member 11 comprises two facing gripping arms 22 movable towards one another to define the closed configuration and away from one another to define the open configuration.

In particular, gripping arms 22 of each gripping member 11 are hinged to a bottom portion of the relative carriage 16 about respective axes parallel to axis A and cooperate to one another to pick up a respective bottle 2 at pick-up station 7, to retain it along path T and to release it at outlet station 9.

In the closed configuration, gripping arms 22 of each gripping member 11 retain therebetween a respective bottle 2 by its neck; in the open configuration, gripping arms 22 of each gripping member 11 are moved away from one another with respect to the closed configuration to allow engagement or release of a respective bottle 2.

Gripping arms 22 of each gripping member 11 comprise respective arcuate head portions with facing concavities so as to cooperate in use with opposite sides of the neck of a respective bottle 2, which is therefore almost completely encircled by such head portions.

Displacement of the gripping arms 22 of each gripping member 11 from the closed configuration to the open configuration and vice versa is obtained in a known manner by interaction with a fixed cam (no shown) carried by support structure 12 and following in part path T.

With reference to the enclosed Figures, conveying apparatus 1 further comprises:
- at least one endless conveyor 25 arranged on the opposite side of linear transport branch 4 of feeding conveyor 3 with respect to conveying wheel 6 and having an operative branch 26 extending parallel to the linear transport branch 4 itself; and
- a plurality of pushing elements 27 carried by endless conveyor 25, protruding above linear transport surface 5 at operative branch 26 and cyclically acting on the bottle 2 destined to be picked-up by conveying wheel 6 at pick-up station 7 to guide it within the receiving seat 10 of the respective gripping member 11.

In particular, endless conveyor 25 is preferably a chain conveyor lying horizontally on one side of linear transport branch 4; endless conveyor 25 further comprises a return branch 28 connecting the opposite ends of operative branch 26.

Endless conveyor 25 comprises an endless transport element 29, preferably a endless chain, wound around a plurality of pulleys 30, having respective axes parallel to axis A and one of which motorized independently from feeding conveyor 3, conveying wheel 6 and outlet conveyor 8.

Pushing elements 27 are evenly distributed along endless conveyor 25 and secured to given portions of endless element 29.

Pushing elements 27 are advanced by endless conveyor 25 along a path Z of endless configuration, having an operative portion Z1 defined by operative branch 26 and extending parallel to path P.

Each pushing element 27 has a guide profile 31 extending, at pick-up station 7, in part transversely to path P followed by bottles 2 so as to force the bottle 2 passing through the pick-up station 7 itself towards conveying wheel 6.

In particular, guide profile 31 of each pushing element 27 comprises:
- a curved guiding surface 32 protruding towards conveying wheel 6 along operative branch 26 so as to reduce the passage section for bottles 2 between the pushing element 27 itself and the conveying wheel 6; and
- a straight surface 33 arranged upstream of curved guiding surface 32 along path Z and extending parallel to path P along operative branch 26 of endless conveyor 25.

In greater details, along operative branch 26, curved guiding surface 32 of each pushing element 27 is concave towards the bottles 2 arriving at pick-up station 7.

The operation of conveying apparatus 1 is described with reference to one bottle 2 and starting from a condition, in which such bottle 2 is advanced along path P by linear transport branch 4 of feeding conveyor 3, rests on the linear transport branch 4 itself in an upright position with its neck above its base and is approaching pick-up station 7.

In the meantime, one carriage 16 is also approaching pick-up station 7 with its gripping member 11 in the open configuration and one pushing element 27 is following the bottle 2 with the curved guiding surface 32 of guide profile 31 placed downstream of the bottle 2 itself along path P.

During the passage at pick-up station 7, the gripping member 11 in the open configuration houses within its receiving seat 10 the bottle 2 to be picked up, and the curved guiding surface 32 of the adjacent pushing element 25 guides the bottle 2 in the transition from linear path P to curved path T.

The gripping member 11 is then moved to the closed configuration, in which its gripping arms 22 cooperate with the opposite sides of the neck of the bottle 2 to retain it therebetween.

Once the gripping member 11 leaves pick-up station 7, also the pushing element 25 is moved by endless conveyor 25 out of linear transport branch 4 so as to not hamper advancement of the next bottle 2 along path P, should that bottle 2 be left on feeding conveyor 3.

The velocity of the endless conveyor 25 is regulated in such a way to bring one pushing element 27 at pick-up station 7 every time that one bottle 2 has to be transferred from feeding conveyor 3 to conveying wheel 6.

The bottle 2 picked up by conveying wheel 6 is transported along path T by the respective gripping member 11 up to outlet station 9, where the gripping member 11 itself is moved to the open configuration to release the bottle on the linear transport branch 8a of the outlet conveyor 8.

During movement along path T, the gripping member 11 bringing the bottle 2 is accelerated or slowed down to adapt to the velocity V2 on outlet conveyor 8.

The advantages of conveying apparatus 1 according to the present invention will be clear from the foregoing description.

In particular, each pushing element 27 of endless conveyor 25 acts as a temporary body guide, forcing the respective bottle 2 along the circular trajectory followed by the respective gripping member 11, so as to prevent excessive tilt of the bottle 2 itself due to the inertia acceleration and facilitating the transition from the linear motion (when feeding conveyor 3 is carrying the bottle 2) to the circular motion (when the gripping member 11 is carrying the bottle 2).

Once its purpose is served, each pushing element 27 moves away from the area of the feeding conveyor 3, freeing the path P for the bottles 2 left on the feeding conveyor 3 itself.

The described solution permits to reduce the force needed for the gripping members 11 to pick up the respective bottles 2; this produces a reduced stress on the gripping members 11 as well as on the bottles 2, particularly in the case of lightweight PET bottles.

Last but not least, the new solution permits to minimize the risks of bottle escaping during the pick-up step.

Clearly, changes may be made to conveying apparatus 1 as described herein without, however, departing from the scope of protection as defined in the accompanying claims.

## Claims

1. A conveying apparatus (1) for transporting articles (2), in particular containers, comprising:
- a feeding conveyor (3) having at least one linear transport branch (4); said linear transport branch (4) being configured to advance a plurality of articles (2) along a first path (P) of linear configuration and defining a linear transport surface (5) on which said articles (2) rest in use; and
- a conveying wheel (6) arranged adjacent to the linear transport branch (4) of the feeding conveyor (3) and configured to selectively pick up articles (2) from said linear transport branch (4) at a pick-up station (7) as well as to transfer the articles (2) themselves away from said pick-up station (7); the conveying wheel (6) comprising a plurality of receiving seats (10) rotating along a second path (T) of annular configuration, adjacent to the first path (P) at the pick-up station (7); each receiving seat (10) being settable between a closed configuration, in which it retains a respective article (2), and an open configuration, in which it allows engagement or release of a respective article (2);
the conveying apparatus (1) being **characterized by** further comprising:
- at least one endless conveyor (25) arranged on the opposite side of the linear transport branch (4) of the feeding conveyor (3) with respect to the conveying wheel (6) and having an operative branch (26) extending parallel to the linear transport branch (4) itself; and
- at least one pushing element (27) carried by the endless conveyor (25), protruding above the linear transport surface (5) at the operative branch (26) and cyclically acting on the article (2) destined to be picked-up by the conveying wheel (6) at the pick-up station (7) to guide it within the respective receiving seat (10).

2. The conveying apparatus as claimed in claim 1, wherein the pushing element (27) is advanced by the endless conveyor (25) along a third path (Z) of endless configuration, having an operative portion (Zl) defined by the operative branch (26) and extending parallel to the first path (P).

3. The conveying apparatus as claimed in claim 1 or 2, wherein the endless conveyor (25) is motorized independently from the feeding conveyor (3) and the conveying wheel (6).

4. The conveying apparatus as claimed in any one of the foregoing claims, wherein the endless conveyor (25) comprises an endless transport element (29) wound around a plurality of pulleys (30), one of which motorized.

5. The conveying apparatus as claimed in any one of the foregoing claims, wherein said pushing element (27) has a guide profile (31) extending, at the pick-up station (7), at least in part transversely to the first path (P) so as to force the article (2) passing through the pick-up station (7) itself towards the conveying wheel (6).

6. The conveying apparatus as claimed in claim 5, wherein the guide profile (31) of the pushing element (27) comprises a curved guiding surface (32) protruding towards the conveying wheel (6) along the operative branch (26) so as to reduce the passage section for the articles (2) between the pushing element (27) itself and the conveying wheel (6).

7. The conveying apparatus as claimed in claim 6, wherein the curved guiding surface (32) is concave towards the articles (2) arriving at the pick-up station (7).

8. The conveying apparatus as claimed in claim 6 or 7, wherein the guide profile (31) of the pushing element (27) has a straight surface (33) arranged upstream of the curved guiding surface (32) along the third path (Z) and extending parallel to the first path (P) along the operative branch (26) of the endless conveyor (25).

9. The conveying apparatus as claimed in any one of the foregoing claims, wherein said linear transport surface (5) of the feeding conveyor (3) and said first path (P) extend horizontally, and wherein said second path (T) is coaxial to a vertical axis (A).

10. The conveying apparatus as claimed in any one of the foregoing claims, wherein the receiving seats (10) of the conveying wheel (6) protrude above the linear transport surface (5) of the feeding conveyor (3) at least at the pick-up station (7).

11. The conveying apparatus as claimed in any one of the foregoing claims, wherein said receiving seats (10) of the conveying wheel (6) are defined by respective gripping members (11).

12. The conveying apparatus as claimed in claim 11, wherein each gripping member (11) comprises two facing gripping arms (22) movable towards one another to define the closed configuration and away from one another to define the open configuration.

13. The conveying apparatus as claimed in claim 11 or 12, wherein the conveying wheel (6) comprises a fixed support structure (12) and an annular guide element (15) carried by the support structure (12) and extending coaxial to the second path (T); and wherein said gripping members (11) are independently moved along said guide element (15).

14. The conveying apparatus as claimed in claim 13, wherein the conveying wheel (6) further comprises a movable portion (13) mounted on the support structure (12) in a rotating manner and carrying said guide element (15).
